# EUROPÄISCHE PATENTSCHRIFT

(11) **EP 2 576 276 B1**
(45) Veröffentlichungstag und Bekanntmachung des Hinweises auf die Patenterteilung: **26.09.2018**
(21) Anmeldenummer: 11719174.2
(22) Anmeldetag: 18.04.2011
(51) Int. Cl.: B60L 11/18

(54) **FAHRZEUG, ANLAGE UND VERFAHREN ZUM BETREIBEN EINER ANLAGE**
VEHICLE, SYSTEM, AND METHOD FOR THE OPERATION OF A SYSTEM
VÉHICULE, INSTALLATION ET PROCÉDÉ DE FONCTIONNEMENT D'UNE INSTALLATION

(30) Priorität: 27.05.2010 DE 102010021706
(43) Veröffentlichungstag der Anmeldung: 10.04.2013
(73) Patentinhaber: Sew-Eurodrive GmbH & Co. KG, 76646 Bruchsal (DE)
(72) Erfinder: SCHMIDT, Josef, 76676 Graben-Neudorf (DE)
(74) Vertreter: Tüngler, Eberhard
(86) Internationale Anmeldenummer: PCT/EP2011/001957
(87) Internationale Veröffentlichungsnummer: WO 2011/147507

(56) Entgegenhaltungen:
- WO-A1-97/38768
- WO-A1-98/47734
- DE-A1- 2 851 538
- DE-A1- 19 918 655
- DE-A1-102007 024 293
- DE-A1-102008 008 561
- US-A1- 2010 007 214

## Beschreibung

Die Erfindung betrifft ein Fahrzeug, eine Anlage und ein Verfahren zum Betreiben einer Anlage.

Es ist bekannt Fahrzeuge mit einem elektrischen Antrieb auszustatten, der Räder des Fahrzeuges derart antreibt, dass das Fahrzeug entlang einer Bodenfläche verfahrbar ist und der elektrische Antrieb aus einem Energiespeicher versorgbar ist, siehe z.B. DE10 2007 024 293.

Der Erfindung liegt daher die Aufgabe zugrunde, die Flexibilität beim Lösen von logistischen Aufgaben weiterzubilden.

Erfindungsgemäß wird die Aufgabe bei dem Fahrzeug nach den in Anspruch 1, bei der, Anlage nach den in Anspruch 11 und bei dem Verfahren zum Betreiben einer Anlage nach den in Anspruch 12 angegebenen Merkmalen gelöst.

Wichtige Merkmale der Erfindung bei dem Fahrzeug sind, dass an der Unterseite Antriebsmittel angeordnet sind,
wobei an mindestens einer Seitenfläche eine Wicklung, insbesondere Spulenwicklung, angeordnet ist.

Von Vorteil ist dabei, dass eine induktive Versorgung des Fahrzeuges an einer Seitenfläche ermöglicht ist. Somit ist Energie von einem weiteren solchen Fahrzeug aufnehmbar oder an ein weiteres Fahrzeug abgebbar. Alternativ ist auch Energie von einer stationär angebrachten Wicklung aufnehmbar und somit der Energiespeicher beladbar. Statt dem Beladen des Energiespeichers ist die Energie auch dem Antrieb, also den Antriebsmitteln, des Fahrzeugs zuführbar, ein Energiespeicher des Fahrzeugs aufladbar, einer vom Fahrzeug umfassten Fördereinheit zuführbar oder einem weiteren Fahrzeug über eine weitere Wicklung zuführbar.

Bei einer vorteilhaften Ausgestaltung weisen die Antriebsmittel zumindest ein Rad oder eine Rolle auf, das beziehungsweise die von einem elektrischen Motor antreibbar ist, der am Fahrzeug angeordnet ist. Von Vorteil ist dabei, dass ein Verfahren über der Bodenfläche ausführbar ist. Die Erfindung umfasst auch schienengeführte Fahrzeuge, also nicht zweidimensional sondern nur eindimensional verfahrbare Fahrzeuge.

Bei einer vorteilhaften Ausgestaltung ist der elektrische Motor von einem Umrichter speisbar, welcher aus einem Energiespeicher versorgbar ist, insbesondere wobei Energiespeicher und Umrichter am Fahrzeug angeordnet sind. Von Vorteil ist dabei, dass ein Verfahren des Fahrzeugs und/oder ein Betreiben einer Fördereinheit mit der Energie ausführbar ist

Bei einer vorteilhaften Ausgestaltung weist das Fahrzeug eine Fördereinheit auf, insbesondere an seiner Oberseite, insbesondere wobei die Fördereinheit von dem Energiespeicher versorgbar ist,

insbesondere wobei die Fördereinheit eine Rollenförderbahn aufweist. Von Vorteil ist dabei, dass das Fahrzeug auf eine Zielposition in der Anlage verfahrbar ist und während der Bewegung dorthin und/oder an der Zielposition eine Förderaufgabe, also eine logistische Aufgabe, durchführbar ist. Beispielsweise wird ein Objekt von einer Seite des Fahrzeugs auf die gegenüberliegende Seite des Fahrzeugs befördert. Ein anderes Beispiel ist ein Sortieren, bei dem ein Objekt von einer ersten Seite des Fahrzeugs an eine zweite oder dritte Seite des Fahrzeugs befördert wird, wobei die Entscheidung für die Förderung an die zweite oder dritte Seite von einem Rechner getroffen wird, dem die Signale eines Sensors zugeführt werden, mit welchem Eigenschaften und/oder Informationen des Objekts detektiert werden, beispielsweise Informationen, die in einem Barcode, RFID-Tag oder elektronischem Typenschild gespeichert sind oder Eigenschaften, wie Gewicht, Materialeigenschaften oder dergleichen.

Bei einer vorteilhaften Ausgestaltung ist die Wicklungsachse der Wicklung senkrecht zur Normalenrichtung der Bodenfläche ausgerichtet, auf der das Fahrzeug verfahrbar ist. Von Vorteil ist dabei, dass somit die Wicklung beispielsweise als Ringwicklung ausführbar ist und ein weiteres Fahrzeug mit einer ebensolchen Wicklung derart heranführbar ist, dass die Wicklungen parallel und mit geringem Abstand zueinander positionierbar sind, so dass eine gute induktive Kopplung zwischen den beiden Wicklungen erreichbar ist.

Bei einer vorteilhaften Ausgestaltung sind am Fahrzeug mindestens zwei, drei oder vier Wicklungen angeordnet, deren Wicklungsachsen in einer Ebene liegen. Von Vorteil ist dabei, dass das Fahrzeug beispielsweise quaderförmig ausführbar ist und somit an jeder Seite in einfacher Weise induktiv ankoppelbar ist an ein baugleiches oder ähnliches Fahrzeug. Somit ist der Aufbau eines Verbandes aus Modulen ermöglicht, wobei jedes Modul als Fahrzeug ausgeführt ist. Das Koppeln der Module ist dadurch ausführbar, dass ein als Master fungierendes Fahrzeug weitere, als Slave fungierende Fahrzeuge führt und diese somit synchronisiert bewegt werden. Innerhalb des Verbandes halten dann die Fahrzeuge den jeweiligen relativen Abstand zu ihren direkt benachbarten Fahrzeugen möglichst konstant, wodurch auch eine konstante induktive Kopplung der seitlich angebrachten Wicklungen erreichbar ist und daher auch eine entsprechend effektiver Energieübertragung.

Bei einer vorteilhaften Ausgestaltung ist eine der Wicklungen von einem Wechselrichter mit Wechselstrom beaufschlagbar, der aus dem Energiespeicher versorgbar ist,

insbesondere wobei der Wechselrichter ein DC/AC-Wandler ist. Von Vorteil ist dabei, dass ein Wechselstrom verfügbar ist und somit ein Fahrzeug eine seiner Wicklungen als Primärwicklung eines Transformators betreiben kann, wobei die zugehörige Sekundärwicklung am direkt benachbarten Fahrzeug angeordnet ist und der induktiv übertragene Strom einem AC/DC-Wandler zugeführt wird, insbesondere einer Gleichrichteranordnung.

Bei einer vorteilhaften Ausgestaltung weist der Energiespeicher eine Batterie, einen Akkumulator, einen Kondensator, einen Doppelschicht-Kondensator und/oder einen Ultracap auf. Von Vorteil ist dabei, dass große Mengen Energie speicherbar sind und somit längerfristige logistische Aufträge ausführbar sind. Beim Abbremsen des Fahrantriebs und/oder der Fördereinheit des Fahrzeuges wird Energie durch motorisches Bremsen erzeugt und ebenfalls dem Energiespeicher zugeführt. Hierbei eignen sich besonders die Doppelschicht-Kondensatoren und/oder Ultracaps, da ihnen kurzfristig große Ströme zuführbar sind.

Bei einer vorteilhaften Ausgestaltung ist aus einer der Wicklungen ein AC/DC-Wandler, insbesondere umfassend einen Gleichrichter, speisbar, so dass der Energiespeicher aufladbar und/oder der umrichtergespeiste Motor versorgbar ist. Von Vorteil ist dabei, dass nicht nur der Fahrantrieb und die Fördereinheit des Fahrzeuges aus dem AC/DC-Wandler versorgbar sind sondern auch der Energiespeicher aufladbar ist, insbesondere bei entsprechendem Energieüberschuss.

Bei einer vorteilhaften Ausgestaltung ist im Fahrzeug Schalter angeordnet sind, mittels welcher die Richtung des Energiefluss zwischen Wicklung und Energiespeicher steuerbar,

insbesondere wobei Wicklung und Energiespeicher über einen rückspeisefähigen Wechselrichter verbunden sind, insbesondere wobei der rückspeisefähige Wechselrichter zwei Halbbrücken aufweist, die jeweils einen oberen und einen unteren Leistungshalbleiterschalter aufweisen, wobei jedem Schalter eine Diode parallel zugeschaltet ist,

insbesondere wobei die Leistungshalbleiterschalter pulsweitenmoduliert ansteuerbar sind von einer Steuerelektronik des Fahrzeugs. Von Vorteil ist dabei, dass somit eine bidirektionale Energiestromführung ermöglicht ist. Dies bedeutet, dass jede Wicklung entweder als Primärwicklung oder als Sekundärwicklung eines Transformators betreibbar ist. Bei Vorhandensein mehrerer seitlicher Wicklungen am Fahrzeug ist es vorteilhaft, weitere Schalter vorzugsehen, die ein Verbinden oder Trennen einer jeweiligen Wicklung mit dem rückspeisefähigen Wechselrichter ermöglicht.

Bei einer vorteilhaften Ausgestaltung weist die Wicklung einen Spulenkern auf, insbesondere einen Ferritkern,
insbesondere wobei der Spulenkern derart im Fahrzeug angeordnet ist und Schenkel des Kerns derart zur Außenfläche des Fahrzeugs ausgerichtet sind, dass bei entsprechendem Ausrichten eines weiteren Fahrzeugs mit einem solchen Kern eine geschlossene Führung eines von einer Wicklung des Fahrzeugs oder des weiteren Fahrzeugs erzeugten Magnetfeldes im Kern erreichbar ist, insbesondere ohne Luftspalt oder mit geringfügigem Luftspalt. Von Vorteil ist dabei, dass eine besonders starke induktive Kopplung erreichbar ist. Bei ungenügender Kopplung ist es vorteilhaft, die als Sekundärwicklung fungierende
Wicklung mit einer Kapazität derart in Reihe oder parallel zu verbinden, dass die zugehörige Resonanzfrequenz im Wesentlichen der Frequenz des induzierten Stromes entspricht. Mittels dieser Resonanz ist eine hoher Wirkungsgrad erreichbar - auch bei schwankenden Luftspalten.

Bei einer vorteilhaften Ausgestaltung weist das Fahrzeug ein Positionserfassungssystem auf, insbesondere umfassend ein GPS System und/oder ein Bilderkennungssystem zur Erkennung von in der Anlage angeordneten Markierungen. Von Vorteil ist dabei, dass das Fahrzeug möglichst autonom betreibbar ist und somit nur geringe Datenmengen zu übertragen sind.

Bei einer vorteilhaften Ausgestaltung weist das Fahrzeug eine Datenaustauschverbindung auf, insbesondere eine berührungslose Datenverbindung, zu einem zentralen Rechner der Anlage und/oder zu mindestens einem weiteren Fahrzeug aufweist. Von Vorteil ist dabei, dass vom zentralen Rechner die Aufträge, also logistische Aufgaben übermittelbar sind. Außerdem sind auch Daten übermittelbar, die zur Positionsbestimmung des Fahrzeuges verwendbar sind, oder Daten, die die Positionen anderer Fahrzeuge betreffen.

Bei einer vorteilhaften Ausgestaltung weist das Fahrzeug an der Unterseite eine Sekundärwicklung auf, insbesondere welche induktiv an einen am Boden angeordneten Primärleiter ankoppelbar ist, so dass der Sekundärwicklung eine Kapazität derart in Reihe und/oder parallel zugeschaltet ist, dass die zugehörige Resonanzfrequenz der Frequenz eines in den Primärleiter eingespeisten Wechselstroms im Wesentlichen gleicht. Von Vorteil ist dabei, dass an einer speziellen Position, wo der Primärleiter im Boden vorgesehen ist, oder auch während der Bewegung des Fahrzeuges entlang eines im Boden langgestreckt verlegten Primärleiters das Fahrzeug induktiv versorgbar ist.

Wichtige Merkmale bei der Anlage mit mindestens einem zuvor beschriebenen Fahrzeug sind, dass im Boden ein Primärleiter langgestreckt verlegt ist, so dass das Fahrzeug induktiv aus dem Primärleiter versorgbar ist, insbesondere während der Fahrt. Von Vorteil ist dabei, dass auch bei entleertem Energiespeicher ein Bewegen des Fahrzeugs und ein Betreiben der Fördereinheit ermöglicht ist.

Wichtige Merkmale bei dem Verfahren zum Betreiben einer Anlage mit obengenannten Fahrzeugen sind, dass ein Verband von Fahrzeugen gebildet wird zur Lösung einer gemeinsamen logistischen Aufgabe,
wobei Energie aus dem Energiespeicher eines Fahrzeugs des Verbandes übertragen wird an ein weiteres Fahrzeug des Verbandes,
wobei der Energiefluss über induktive Kopplungen zwischen den Fahrzeugen des Verbandes geführt wird. Von Vorteil ist dabei, dass die Energiereserven des Verbandes gemeinsam von den Fahrzeugen des Verbandes nutzbar sind.

Bei einer vorteilhaften Ausgestaltung werden die Fahrzeuge synchronisiert verfahren, insbesondere wobei eines der Fahrzeuge des Verbandes als Master fungiert und die weiteren Fahrzeuges des Verbandes als Slave fungieren. Von Vorteil ist dabei, dass der Verband synchronisiert bewegbar ist, also wie eine Einheit, und die Fahrzeuge in Master-Slave-Regelung betreibbar sind.

Bei einer vorteilhaften Ausgestaltung reicht die in den Energiespeichern der Fahrzeuge des Verbands gespeicherte gesamte Energiemenge für die Ausführung der logistischen Aufgabe durch die Fahrzeuge des Verbands aus. Von Vorteil ist dabei, dass die für die Aufgabe insgesamt benötigte Energiemenge bestimmt wird und nur dann ausgeführt wird, wenn die in den Energiespeichers des Verbandes gespeicherte Energiemenge ausreicht.

Bei einer vorteilhaften Ausgestaltung entspricht die von einem Primärleiter an ein Fahrzeug oder an mehrere Fahrzeuge übermittelte elektrische Leistung der für die Ausführung der logistischen Aufgabe durch die Fahrzeuge des Verbands notwendigen Leistung oder übersteigt diese. Von Vorteil ist dabei, dass die an ein oder mehrere Fahrzeuge induktiv vom Boden her zur Sekundärwicklung des jeweiligen Fahrzeugs zugeführte Leistung innerhalb des Verbandes weiterverteilbar ist und somit auch von nicht induktiv aus dem am Boden vorgesehenen Primäreiter versorgbaren Fahrzeugen nutzbar ist. Somit muss nicht an jeder Stelle in der Anlage im Boden ein Primärleiter vorgesehen werden sondern es genügt, wenn wenigstens ein Fahrzeug des Verbandes an einer Stelle positioniert ist, das induktiv versorgbar ist. Somit profitiert dann der gesamte Verband von dieser zugeführten elektrischen Leistung. Ergänzend kann - insbesondere auch bei benötigten Spitzenleistung - auf die Energiespeicher des Verbandes zurückgegriffen werden.

Bei einer vorteilhaften Ausgestaltung reicht die von einem Primärleiter an ein Fahrzeug oder an mehrere Fahrzeuge übermittelte elektrische Leistung der für die Ausführung der logistischen Aufgabe durch die Fahrzeuge des Verbands notwendigen Leistung unter Berücksichtigung der von den Energiespeichern der Fahrzeuge des Verbandes lieferbare Leistung aus. Von Vorteil ist dabei, dass länger dauernde Aufgaben ausführbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Fahrzeug schematisch in Ansicht von oben gezeigt, wobei die auf dem Fahrzeug 1 angeordnete Fördereinrichtung nicht gezeigt ist, mit welcher eine Förderaufgabe lösbar ist.

In der Figur 2 sind in gleicher Ansicht mehrere solche Fahrzeuge 1 aneinander gekoppelt vorgesehen, so dass sie ein Cluster, also einen Verband, bilden. Dieser Verband, also eine Gruppe synchronisiert bewegter Fahrzeuge 1 oder zusammen aufgestellter Fahrzeuge 1 löst eine gemeinsame Förderaufgabe.

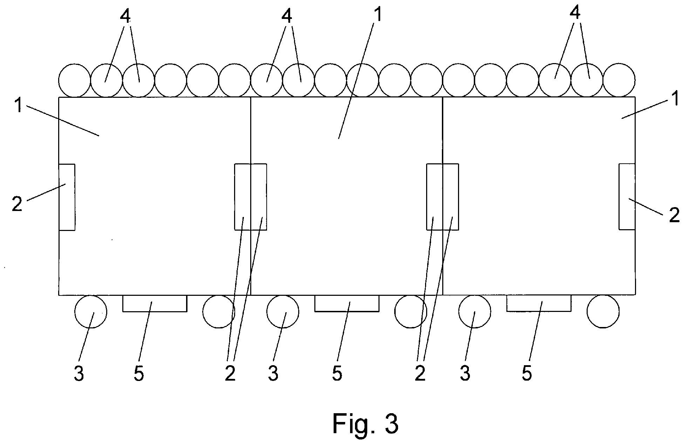

In der Figur 3 ist eine Seitenansicht des Verbandes gezeigt, bei dem die Rollen 3 des Antriebs des Fahrzeugs 1 sichtbar sind, mit welchen das Fahrzeug 1 über dem Boden verfahrbar ist und die oben angeordnete Fördereinheit mit Förderrollen 4 zum Transportieren von Objekten, also Lösen einer Förderaufgabe.

Das jeweilige Fahrzeug 1 ist innerhalb einer Anlage bewegbar.

An der Unterseite des Fahrzeugs 1 ist eine Sekundärwicklung 5 angeordnet, mit welcher das Fahrzeug 1 induktiv aus einem im Boden verlegten Primärleiter versorgbar ist. Alternativ zum Verlegen des Primärleiters im Boden ist auch eine Ladematte verwendbar, die als flache Matte ausgeführt ist und eine Wicklung eines Primärleiters enthält, also eine Primärwicklung.

In jedem Fall wird in den Primärleiter ein Wechselstrom mit einer Mittelfrequenz zwischen 10 und 500 kHz eingeprägt und der Sekundärwicklung 5 eine Kapazität derart in Reihe oder parallel zugeschaltet, dass die zugehörige Resonanzfrequenz im Wesentlichen der Mittelfrequenz gleicht. Auf diese Weise ist auch bei schwacher Kopplung, wie beispielsweise wegen Luftspalt zwischen Primärleiter und Sekundärwicklung 5, ein hoher Wirkungsgrad erreichbar.

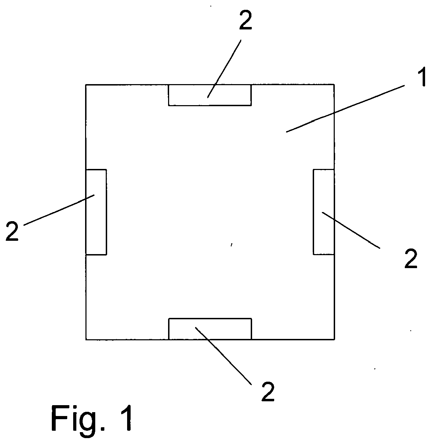

Das Fahrzeug nach Figur 1 weist eine Steuerelektronik auf, die eine berührungslose Datenverbindung zu einem zentralen Rechner der Anlage aufweist. Die Datenverbindung ist beispielsweise per Funkwellen, Infrarot oder durch Aufmodulation höherfrequenter Stromanteile auf den Strom im Primärleiter und/oder Sekundärwicklung, ausführbar.

Darüber hinaus weist das Fahrzeug 1 ein Positionserfassungssystem auf und ist somit in der Lage seine Position innerhalb der Anlage zu bestimmen. Hierzu ist entweder ein nach Art eines GPS mittels Funkwellen arbeitendes System oder ein Triangulationssystem verwendbar. Alternativ ist auch ein Positionserfassungs-System mittels Bilderkennung verwendbar, wobei innerhalb der Anlage Markierungen angebracht werden, welche von einer Kamera des Fahrzeuges 1 erkennbar sind und somit der Abstand erfassbar ist.

Mittels der von einem elektrischen Antrieb in Drehbewegung versetzbaren Rollen 3 ist das Fahrzeug verfahrbar, insbesondere in beliebige Richtungen entlang der Bodenoberfläche.

Mittels der Fördereinheit 4 ist ein Objekt transportierbar, wobei die Fördereinheit hierbei Sensoren zum Erkennen des Objektes aufweist, so dass die Förderrollen 4 der Fördereinheit erst bei Eintreffen oder Nahekommen des Objektes einschaltbar sind und somit Energieeffizient betreibbar sind.

Die Fördereinheit ist dabei derart aufgebaut, dass sie entweder eine lineare Förderung bewirkt oder auch eine abzweigende Förderung bewirkbar ist, also entsprechend einer Weiche ein entlang der Fördereinheit gefördertes Objekt seitlich abgibt.

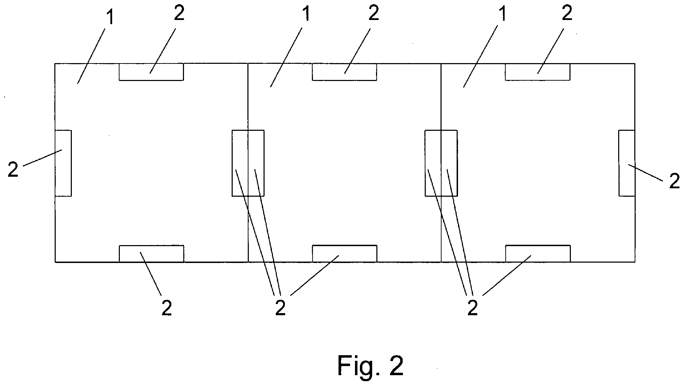

Die Fahrzeuge 1 sind gemäß Figur 2 in einen Verband einbringbar. Hierzu ist beispielsweise von dem zentralen Rechner der Anlage vorgebbar, welche Fahrzeuge 1 zu dem jeweiligen Verband sich anschließen sollen. Alternativ ist auch ein quasi Herbeirufen von weiteren Fahrzeugen 1 durch ein erstes Fahrzeug 1 ausführbar. Hierzu bekommt zunächst das erste Fahrzeug 1 eine erste Transportaufgabe und nimmt danach über die Datenverbindung den Kontakt auf zu anderen Fahrzeugen 1. Wenn diese keine weitere Aufgabe haben und somit frei sind, schließen sich diese mit dem ersten Fahrzeug 1 zu dem Verband zusammen. Der Verband ist bei einer ersten Aufgabe stationär, also unbeweglich, als Ganzes zusammengestellt. Hierbei ordnen sich die Fahrzeuge nebeneinander an und können somit eine Förderaufgabe erledigen. Beispielsweise sind hierbei Objekte an einer ersten Position von der Fördereinheit 4 eines ersten Fahrzeuges aufzunehmen und werden dann von diesem weitergefördert auf ein benachbartes Fahrzeug 1. Dieses oder ein weiteres Fahrzeug 1 des Verbandes weist einen Sensor auf, der Eigenschaften des Objektes erkennen kann, beispielsweise Barcode-Informationen oder RFID-Informationen des Objektes. Je nach Art der vom Sensor erkannten Information wird das Objekt gerade oder seitlich weitergefördert. Auf diese Weise ist also eine Sortieraufgabe als Förderaufgabe lösbar.

Jedes Fahrzeug hat zwar einen Energiespeicher, aus dem der Antrieb des Fahrzeugs 1 und/oder die Fördereinheit 4 versorgbar ist.

Durch die gleichartige Ausführung von Fahrzeugen ist ein schneller und einfacher Austausch sowie ein modulares Zusammenstellen ermöglicht.

Da der Primärleiter nicht im gesamten Bereich der Anlage im Boden verlegt ist und auch nicht der gesamte Boden mit Ladematten belegt ist, erhalten nicht alle Fahrzeuge 1 Energie. Zur Durchleitung von Energie an die weiteren Fahrzeuge 1 weist jedes Fahrzeug an seinen Seiten Wicklungen 2 auf, mit denen eine jeweilige Wicklung 2 eines anderen Fahrzeugs induktiv koppelbar ist. Über diese induktive Kopplung nach Art eines Transformators ist somit Energie übertragbar von demjenigen Fahrzeug, das genügend große Ressourcen aufweist.

Somit ist Energie vom Primärleiter an das erste Fahrzeug und von dort über die seitliche Wicklung an ein nächstes Fahrzeug weiterübertragbar. Auf diese Weise ist ein gesamter Verband mit Energie versorgbar.

Die jeweilige Wicklung 2 ist vorzugsweise um einen E-förmigen oder U-förmigen Ferritkern herumgewickelt vorgesehen, so dass dieser Kern zusammen mit dem entsprechenden Kern des benachbarten Fahrzeugs das Magnetfeld des Transformators ohne oder nur mit geringfügigem Luftspalt führt. Also sind die Endbereiche der Schenkel des jeweiligen E oder U aufeinander zu orientiert vorgesehen.

Bei einer anderen Aufgabe, schließt sich der Verband zusammen, indem die Fahrzeuge 1 synchronisiert bewegt werden. Somit ist ein an einer ersten Position aufgenommenes Objekt vom gesamten Verband transportierbar, wobei die Gewichtskraft sich aufteilt, auf die verschiedenen Fahrzeuge 1 des Verbandes, wenn das Objekt groß ist. Der gesamte Verband ist somit bewegbar zu einer zweiten Position, bei der das Objekt abladbar ist, insbesondere mittels der Fördereinheit.

Bei der Durchführung dieser anderen Aufgabe ist es zulässig, dass die Energiespeicher der Fahrzeuge verschieden stark beladen sind. Wenn während der Durchführung keine Energiezuführ aus dem Primärleiter an den Verband ausführbar ist, ist allerdings notwendig, dass die gesamte in den Energiespeichern der Fahrzeuge gespeicherte Energiemenge ausreicht für die Durchführung der Aufgabe. Zum Verteilen der in Energiespeichern mancher Fahrzeuge vorhandenen Energie an andere Fahrzeuge des Verbandes dienen die mittels der induktiven Kopplungen hergestellten transformatorischen Anordnungen zwischen den Fahrzeugen 1. Denn über die hierzu eingesetzten Wicklungen 2, die an den jeweiligen zueinander zugewandten Seitenflächen der nächst benachbarten Fahrzeuge 1 eingesetzt sind, ist Energie von einem jeweiligen Fahrzeug 1 ans nächst benachbarte Fahrzeug 1 übertragbar.

Im Energie abgebenden Fahrzeug ist hierzu ein DC/AC Wandler angeordnet, welcher aus dem Energiespeicher des Fahrzeugs versorgbar ist und dessen Energiestrom auf diejenige Wicklung 2 oder diejenigen Wicklungen 2 gelenkt wird, die als Primärwicklung der transformatorischen Anordnung vorgesehen ist. Die als Sekundärwicklung fungierende Wicklung 2 des Energie empfangenden Fahrzeugs weist einen AC/DC Wandler auf, um den dortigen Energiespeicher zu laden beziehungsweise den Antrieb der Fördereinheit und/oder des Fahrzeugs zu versorgen. Denn es ist auch vorsehbar, dass während der Bewegung des Verbandes das Objekt von den Fördereinheiten des Verbandes weiter gefördert wird und somit Antriebe der Fahrzeuge 1 und Fördereinheiten 4 gleichzeitig betreibbar sind.

Bei einem Fahrzeug, das Energie von einem ersten nächst benachbarten zu einem zweiten nächst benachbarten Fahrzeug durchleiten soll, ist auch ein direktes Durchschalten des an seiner ersten seitlichen Wicklung 2 empfangenen Wechselstromes an seine zweite seitliche Wicklung ausführbar. Somit werden Verluste der Wandler minimiert.

### Bezugszeichenliste

1 Fahrzeug, Roboter
2 Wicklung
3 Rollen
4 Förderrollen, Fördereinheit
5 Sekundärwicklung

## Patentansprüche

1. Entlang einer zweidimensionalen Bodenfläche verfahrbares Fahrzeug,
wobei an der Unterseite Antriebsmittel angeordnet sind,
wobei das Fahrzeug an seiner Unterseite eine Sekundärwicklung (5) aufweist, mit welcher das Fahrzeug (1) induktiv aus einem im Boden verlegten Primärleiter versorgbar ist,
wobei ein elektrischer Motor von einem Umrichter speisbar ist, welcher aus einem Energiespeicher versorgbar ist, insbesondere wobei Energiespeicher und Umrichter am Fahrzeug angeordnet sind,
wobei an mindestens einer Seitenfläche eine Wicklung, insbesondere Spulenwicklung, angeordnet ist,
wobei aus der beziehungsweise aus einer der Wicklungen ein AC/DC-Wandler, insbesondere umfassend einen Gleichrichter, speisbar ist, so dass der Energiespeicher aufladbar und/oder der umrichtergespeiste Motor versorgbar ist, wobei das Fahrzeug eine Fördereinheit an seiner Oberseite aufweist.

2. Fahrzeug nach mindestens einem der vorangegangenen Ansprüche,
**dadurch gekennzeichnet, dass**
die Antriebsmittel zumindest ein Rad oder eine Rolle aufweisen, das beziehungsweise die von einem elektrischen Motor antreibbar ist, der am Fahrzeug angeordnet ist.

3. Fahrzeug nach mindestens einem der vorangegangenen Ansprüche,
**dadurch gekennzeichnet, dass**
das Fahrzeug eine Fördereinheit aufweist, insbesondere an seiner Oberseite, insbesondere wobei die Fördereinheit eine Rollenförderbahn aufweist.

4. Fahrzeug nach mindestens einem der vorangegangenen Ansprüche,
**dadurch gekennzeichnet, dass**
die Wicklungsachse der Wicklung senkrecht zur Normalenrichtung der Bodenfläche ausgerichtet ist, auf der das Fahrzeug verfahrbar ist.

5. Fahrzeug nach mindestens einem der vorangegangenen Ansprüche,
**dadurch gekennzeichnet, dass**
am Fahrzeug mindestens zwei, drei oder vier Wicklungen angeordnet sind, deren Wicklungsachsen in einer Ebene liegen.

6. Fahrzeug nach mindestens einem der vorangegangenen Ansprüche,
**dadurch gekennzeichnet, dass**
eine der Wicklungen von einem Wechselrichter mit Wechselstrom beaufschlagbar ist, der aus dem Energiespeicher versorgbar ist,
insbesondere wobei der Wechselrichter ein DC/AC-Wandler ist.

7. Fahrzeug nach mindestens einem der vorangegangenen Ansprüche,
**dadurch gekennzeichnet, dass**
der Energiespeicher eine Batterie, einen Akkumulator, einen Kondensator, einen Doppelschicht-Kondensator und/oder einen Ultracap aufweist.

8. Fahrzeug nach mindestens einem der vorangegangenen Ansprüche,
**dadurch gekennzeichnet, dass**
im Fahrzeug Schalter angeordnet sind, mittels welcher die Richtung des Energiefluss zwischen Wicklung und Energiespeicher steuerbar ist,
insbesondere wobei Wicklung und Energiespeicher über einen rückspeisefähigen Wechselrichter verbunden sind, insbesondere wobei der rückspeisefähige Wechselrichter zwei Halbbrücken aufweist, die jeweils einen oberen und einen unteren Leistungshalbleiterschalter aufweisen, wobei jedem Schalter eine Diode parallel zugeschaltet ist,
insbesondere wobei die Leistungshalbleiterschalter pulsweitenmoduliert ansteuerbar sind von einer Steuerelektronik des Fahrzeugs.

9. Fahrzeug nach mindestens einem der vorangegangenen Ansprüche,
**dadurch gekennzeichnet, dass**
die Wicklung einen Spulenkern aufweist, insbesondere einen Ferritkern,
insbesondere wobei der Spulenkern derart im Fahrzeug angeordnet ist und Schenkel des Kerns derart zur Außenfläche des Fahrzeugs ausgerichtet sind, dass bei entsprechendem Ausrichten eines weiteren Fahrzeugs mit einem solchen Kern eine geschlossene Führung eines von einer Wicklung des Fahrzeugs oder des weiteren Fahrzeugs erzeugten Magnetfeldes im Kern erreichbar ist, insbesondere ohne Luftspalt oder mit geringfügigem Luftspalt.

10. Fahrzeug nach mindestens einem der vorangegangenen Ansprüche,
**dadurch gekennzeichnet, dass**
das Fahrzeug ein Positionserfassungssystem aufweist, insbesondere umfassend ein GPS System und/oder ein Bilderkennungssystem zur Erkennung von in der Anlage angeordneten Markierungen,
und/oder dass
das Fahrzeug einen Datenaustauschverbindung, insbesondere eine berührungslose Datenverbindung, zu einem zentralen Rechner der Anlage und/oder zu mindestens einem weiteren Fahrzeug aufweist,
und/oder dass
das Fahrzeug an der Unterseite eine Sekundärwicklung aufweist, insbesondere welche induktiv an einen am Boden angeordneten Primärleiter ankoppelbar ist, so dass der Sekundärwicklung eine Kapazität derart in Reihe und/oder parallel zugeschaltet ist, dass die zugehörige Resonanzfrequenz der Frequenz eines in den Primärleiter eingespeisten Wechselstroms im Wesentlichen gleicht.

11. Anlage mit mindestens einem Fahrzeug nach mindestens einem der vorangegangenen Ansprüche,
**dadurch gekennzeichnet, dass**
im Boden ein Primärleiter langgestreckt verlegt ist, so dass das Fahrzeug induktiv aus dem Primärleiter versorgbar ist, insbesondere während der Fahrt.

12. Verfahren zum Betreiben einer Anlage mit Fahrzeugen nach einem der Ansprüche 1 bis 10,
**dadurch gekennzeichnet, dass**
ein Verband von Fahrzeugen gebildet wird zur Lösung einer gemeinsamen logistischen Aufgabe,
wobei Energie aus dem Energiespeicher eines Fahrzeugs des Verbandes übertragen wird an ein weiteres Fahrzeug des Verbandes,
wobei der Energiefluss über induktive Kopplungen zwischen den Fahrzeugen des Verbandes geführt wird.

13. Verfahren nach mindestens einem der vorangegangenen Ansprüche,
**dadurch gekennzeichnet, dass**
die Fahrzeuge synchronisiert verfahren werden, insbesondere wobei eines der Fahrzeuge des Verbandes als Master fungiert und die weiteren Fahrzeuges des Verbandes als Slave fungieren,
und/oder dass
die in den Energiespeichern der Fahrzeuge des Verbands gespeicherte gesamte Energiemenge für die Ausführung der logistischen Aufgabe durch die Fahrzeuge des Verbands ausreicht,
oder dass
die von einem Primärleiter an ein Fahrzeug oder an mehrere Fahrzeuge übermittelte elektrische Leistung der für die Ausführung der logistischen Aufgabe durch die Fahrzeuge des Verbands notwendigen Leistung entspricht oder diese übersteigt
oder dass
die von einem Primärleiter an ein Fahrzeug oder an mehrere Fahrzeuge übermittelte elektrische Leistung der für die Ausführung der logistischen Aufgabe durch die Fahrzeuge des Verbands notwendigen Leistung unter Berücksichtigung der von den Energiespeichern der Fahrzeuge des Verbandes lieferbare Leistung ausreicht.

## Claims

1. A vehicle which is drivable along a two dimensional floor area,
wherein drive means are arranged on the underside,
wherein the vehicle has, on its underside, a secondary winding (5) with which the vehicle (1) may be inductively powered from a primary conductor laid in the floor,
wherein an electric motor may be fed by a converter which may be powered from an energy store, in particular wherein the energy store and the converter are arranged on the vehicle,
wherein a winding, in particular a coil winding, is arranged on at least one lateral surface,
wherein an AC/DC transformer, in particular comprising a rectifier, may be fed from the winding or from one of the windings so that the energy store may be charged and/or the converter-fed motor may be powered, wherein the vehicle has a conveyor unit on its upper side.

2. The vehicle according to at least one of the preceding claims,
**characterised in that**
the drive means have at least one wheel or roller which may be driven by an electric motor arranged on the vehicle.

3. The vehicle according to at least one of the preceding claims,
**characterised in that**
the vehicle has a conveyor unit, in particular on its upper side, in particular wherein the conveyor unit has a roller conveyor track.

4. The vehicle according to at least one of the preceding claims,
**characterised in that**
the winding axis of the winding is aligned perpendicularly to the normal direction of the floor area on which the vehicle may be moved.

5. The vehicle according to at least one of the preceding claims,
**characterised in that**
at least two, three or four windings are arranged on the vehicle, the winding axes of which are located in one plane.

6. The vehicle according to at least one of the preceding claims,
**characterised in that**
an alternating current, which may be supplied from the energy store, may be applied to one of the windings by an inverter,
in particular wherein the inverter is a DC/AC transformer.

7. The vehicle according to at least one of the preceding claims,
**characterised in that**
the energy store is a battery, an accumulator, a capacitor, a double layer capacitor and/or an ultracapacitor.

8. The vehicle according to at least one of the preceding claims,
**characterised in that**
switches are arranged in the vehicle, by means of which the direction of the energy flow between the winding and the energy store is controllable,
in particular wherein the winding and the energy store are connected via an inverter which is capable of energy recovery, in particular wherein the inverter which is capable of energy recovery has two half bridges which each have an upper and a lower power semiconductor switch, wherein a diode is connected in parallel to each switch,
in particular wherein the power semiconductor switches may be actuated with pulse-width modulation by control electronics of the vehicle.

9. The vehicle according to at least one of the preceding claims,
**characterised in that**
the winding has a coil core, in particular a ferrite core, in particular wherein the coil core is arranged in the vehicle, and limbs of the core are aligned with respect to the outer surface of the vehicle in such a way that, with an appropriate alignment of a further vehicle having such a core, a closed guidance of a magnetic field generated by a winding of the vehicle or the further vehicle may be achieved in the core, in particular without an air gap or with a slight air gap.

10. The vehicle according to at least one of the preceding claims,
**characterised in that**
the vehicle has a position detection system, in particular comprising a GPS system and/or an image recognition system for recognising markers arranged in the installation, and/or **in that**
the vehicle has a data exchange connection, in particular a contactless data connection, to a central processor of the installation and/or to at least one further vehicle, and/or **in that**
the vehicle has, on the underside, a secondary winding which, in particular, may be inductively coupled to a primary conductor arranged on the floor so that a capacitance is connected in series and/or in parallel to the secondary winding in such a way that the associated resonance frequency is substantially equal to an alternating current fed into the primary conductor.

11. An installation having at least one vehicle according to at least one of the preceding claims,
**characterized in that** a primary conductor is laid in elongated form in the floor so that the vehicle may be inductively powered from the primary conductor, in particular when moving.

12. A method for operating an installation having vehicles according to one of Claims 1 to 10,
**characterised in that**
a group of vehicles is formed to perform a common logistical task,
wherein energy from the energy store of one vehicle of the group is transmitted to a further vehicle of the group, wherein the energy flow is guided between the vehicles of the group via inductive couplings.

13. The method according to at least one of the preceding claims,
**characterised in that**
the vehicles are moved synchronously, in particular wherein one of the vehicles of the group functions as a master and the further vehicles of the group function as slaves, and/or **in that**
the total energy quantity stored in the energy stores of the vehicles of the group is sufficient for executing the logistical task by means of the vehicles of the group,
or **in that**
the electrical power transmitted from a primary conductor to a vehicle or to a plurality of vehicles corresponds to or exceeds the power required to execute the logistical task by means of the vehicles of the group,
or **in that**,
of the power required to execute the logistical task by means of the vehicles of the group, the electrical power which is transmitted from a primary conductor to a vehicle or to a plurality of vehicles is sufficient, taking into account the power which may be delivered by the energy stores of the vehicles of the group.

## Revendications

1. Véhicule déplaçable le long de la surface bidimensionnelle d'un sol, sachant que des moyens d'entraînement sont disposés à la face inférieure,
le véhicule comportant, à sa face inférieure, un enroulement secondaire (5) par lequel ledit véhicule (1) peut être alimenté, par induction, à partir d'un conducteur primaire posé dans le sol,
un moteur électrique pouvant être alimenté par un mutateur pouvant tirer sa puissance d'un accumulateur d'énergie, ledit accumulateur d'énergie et ledit mutateur étant notamment implantés sur ledit véhicule,
un enroulement, en particulier un enroulement de bobine, étant disposé sur au moins une surface latérale,
sachant qu'un convertisseur courant alternatif/courant continu, incluant notamment un redresseur, peut tirer sa puissance dudit enroulement ou, respectivement, de l'un des enroulements, de manière à permettre une mise en charge de l'accumulateur d'énergie et/ou une alimentation dudit moteur tirant sa puissance dudit mutateur,
ledit véhicule étant pourvu d'une unité de convoyage sur sa face supérieure.

2. Véhicule selon la revendication précédente,
**caractérisé par le fait que**
les moyens d'entraînement présentent au moins une roue ou une roulette pouvant être entraînée, respectivement, par un moteur disposé sur ledit véhicule.

3. Véhicule selon au moins l'une des revendications précédentes,
**caractérisé par le fait que**
ledit véhicule est muni d'une unité de convoyage, en particulier à sa face supérieure, laquelle unité de convoyage est notamment dotée d'une piste de convoyage par roulettes.

4. Véhicule selon au moins l'une des revendications précédentes,
**caractérisé par le fait que**
l'axe de l'enroulement est orienté perpendiculairement à la direction normale à la surface du sol sur laquelle ledit véhicule peut être déplacé.

5. Véhicule selon au moins l'une des revendications précédentes,
**caractérisé par le fait**
**qu'**au moins deux, trois ou quatre enroulements, dont les axes sont situés dans un plan, sont disposés sur ledit véhicule.

6. Véhicule selon au moins l'une des revendications précédentes,
**caractérisé par le fait que**
l'un des enroulements peut être sollicité par du courant alternatif, au moyen d'un onduleur pouvant tirer sa puissance de l'accumulateur d'énergie,
ledit onduleur étant notamment un convertisseur courant continu /courant alternatif.

7. Véhicule selon au moins l'une des revendications précédentes,
**caractérisé par le fait que**
l'accumulateur d'énergie comprend une batterie, un accumulateur, un condensateur, un condensateur à double couche et/ou un condensateur à ultra haute densité d'énergie.

8. Véhicule selon au moins l'une des revendications précédentes,
**caractérisé par le fait que**
ledit véhicule renferme des commutateurs permettant de commander la direction du flux d'énergie, entre l'enroulement et l'accumulateur d'énergie,
sachant, en particulier, que ledit enroulement et ledit accumulateur d'énergie sont raccordés par l'intermédiaire d'un onduleur régénérateur, lequel onduleur régénérateur comprend notamment deux demi-ponts comportant, à chaque fois, des commutateurs supérieur et inférieur à semi-conducteurs de puissance, une diode étant mise en circuit en parallèle avec chaque commutateur,
sachant notamment que lesdits commutateurs à semi-conducteurs de puissance peuvent être pilotés par une électronique de commande dudit véhicule, avec modulation de largeurs d'impulsions.

9. Véhicule selon au moins l'une des revendications précédentes,
**caractérisé par le fait que**
l'enroulement est muni d'un noyau de bobine, en particulier d'un noyau en ferrite, sachant notamment que l'emplacement dudit noyau de bobine, dans le véhicule, et l'orientation de branches dudit noyau, par rapport à la surface extérieure dudit véhicule, sont tels qu'il soit possible d'obtenir, moyennant orientation correspondante d'un autre véhicule équipé d'un noyau de ce type, un guidage en boucle fermée d'un champ magnétique engendré, dans ledit noyau, par un enroulement dudit véhicule ou dudit autre véhicule, en particulier sans entrefer ou avec un entrefer de taille modeste.

10. Véhicule selon au moins l'une des revendications précédentes,
**caractérisé par le fait que**
ledit véhicule est muni d'un système détecteur d'emplacements incluant, en particulier, un système GPS et/ou un système de reconnaissance d'images, en vue de l'identification de repères placés dans l'installation ;
et/ou que
ledit véhicule est doté d'une connexion d'échange de données, en particulier d'une connexion de données sans contact avec un ordinateur central de ladite installation, et/ou avec au moins un autre véhicule ;
et/ou que
ledit véhicule est pourvu, à la face inférieure, d'un enroulement secondaire pouvant être couplé, par induction, avec un conducteur primaire disposé dans le sol, si bien qu'un condensateur peut être mis en circuit en série et/ou en parallèle avec ledit enroulement secondaire, de façon telle que la fréquence de résonance associée soit, pour l'essentiel, égale à la fréquence d'un courant alternatif injecté dans ledit conducteur primaire.

11. Installation équipée d'au moins un véhicule conforme à au moins l'une des revendications précédentes,
**caractérisée par le fait**
**qu'**un conducteur primaire est posé dans le sol avec étendue en longueur, de telle sorte que le véhicule puisse être alimenté par induction à partir dudit conducteur primaire, en particulier au cours du déplacement.

12. Procédé d'actionnement d'une installation équipée de véhicules conformes à l'une des revendications 1 à 10,
**caractérisé par le fait**
**qu'**une association de véhicules est constituée en vue de l'accomplissement d'une tâche logistique commune,
de l'énergie, émanant de l'accumulateur d'énergie d'un véhicule de l'association, étant alors transmise à un autre véhicule de ladite association,
le flux d'énergie étant guidé par le biais de couplages inductifs entre les véhicules de ladite association.

13. Procédé selon au moins l'une des revendications précédentes,
**caractérisé par le fait que**
les véhicules sont déplacés en synchronisme, sachant notamment que l'un des véhicules de l'association remplit la fonction d'un maître, et que les autres véhicules de ladite association remplissent la fonction d'esclaves ;
et/ou que
la quantité totale d'énergie, stockée dans les accumulateurs d'énergie des véhicules de l'association, est suffisante pour l'accomplissement de la tâche logistique par lesdits véhicules de l'association ;
ou que
la puissance électrique, transférée d'un conducteur primaire à un véhicule ou à plusieurs véhicules, correspond à la puissance nécessaire à l'accomplissement de ladite tâche logistique par les véhicules de ladite association, ou excède ladite puissance ;
ou que
la puissance électrique, transférée d'un conducteur primaire à un véhicule ou à plusieurs véhicules, est suffisante pour fournir la puissance nécessaire à l'accomplissement de ladite tâche logistique par les véhicules de l'association, en prenant en compte la puissance pouvant être délivrée par lesdits accumulateurs d'énergie desdits véhicules de ladite association.
